# FASCICULE DE BREVET EUROPEEN

(11) **EP 0 613 818 B1**
(45) Date de publication et mention de la délivrance du brevet: **18.06.1997**
(21) Numéro de dépôt: 94400463.9
(22) Date de dépôt: 04.03.1994
(51) Int. Cl.: B64D 1/02, F16B 4/00

(54) **Dispositif de serrage hydraulique pour l'accrochage de moyens d'emport sous aéronefs**
Hydraulische Spannvorrichtung für ein Aussenlastaufhängungsgerät eines Flugzeugs
Hydraulic clamps device for the suspension of an aircraft store carrying means

(30) Priorité: 05.03.1993 FR 9302598
(43) Date de publication de la demande: 07.09.1994
(73) Titulaire: R. ALKAN & Cie., 94460 Valenton (FR)
(72) Inventeur: Grosselin, Daniel, F-77680 Roissy en Brie (FR)
(74) Mandataire: Hud, Robert

(56) Documents cités:
- FR-A- 1 092 416
- FR-A- 1 544 595
- FR-A- 2 560 303
- FR-A- 2 643 332
- US-A- 3 033 597
- US-A- 3 663 027

## Description

L'invention concerne l'emport de charges sous aéronefs et, plus particulièrement, l'accrochage sous les aéronefs de moyens d'emport de charges.

On sait que, en vue de l'accrochage d'un dispositif d'emport de charges, la structure porteuse de l'avion comporte un alésage vertical destiné à recevoir un embout cylindrique mâle faisant partie du dispositif d'emport. Généralement, l'extrémité supérieure de l'embout cylindrique se fixe dans un trou d'un support se trouvant à l'intérieur de l'alésage, alors qu'une partie de plus grand diamètre de cet embout engage un épaulement intérieur de l'alésage pour assurer l'immobilisation du dispositif d'emport.

Dans le document FR-A-2 643 332, on a proposé de réaliser cette partie de plus grand diamètre sous la forme d'un écrou se vissant sur le corps de l'embout cylindrique pour être amené jusqu'à sa position d'immobilisation dans laquelle il vient engager ledit épaulement interne de l'alésage.

Cette disposition présente toutefois l'inconvénient d'être d'une réalisation difficile car, faute de place suffisante, l'accès n'est pas possible pour une clé de grosse dimension agissant directement sur l'écrou.

La présente invention a pour objet de remédier à cet inconvénient et elle propose à cet effet un dispositif de serrage, conçu pour être associé à un moyen d'emport de charges sous aéronefs, qui est d'une utilisation particulièrement aisée ne demandant pas d'effort particulier, tout en assurant un serrage efficace contre l'épaulement interne de l'alésage vertical ménagé dans l'aile ou le fuselage de l'aéronef.

Selon l'invention le système de serrage, incorporé à un moyen d'emport de charges sous aéronefs comprenant un embout central vertical destiné à s'engager dans un alésage de la structure porteuse de l'aéronef, et un élément annulaire conçu pour se déplacer le long de l'embout central afin de venir serrer un organe de support, se caractérise par le fait que le système de serrage est hydraulique, ledit élément annulaire déterminant avec la paroi extérieure de l'embout central une chambre de poussée étanche alimentée sélectivement en fluide incompressible, ledit élément annulaire constituant ainsi un piston dont le serrage est commandé par la pression du fluide.

Avantageusement, l'alimentation en fluide de la chambre dé poussée déterminée par l'élément annulaire et la paroi de l'embout central s'effectue au moyen d'une pompe à vis incorporée dans le moyen d'emport. De préférence, la pompe à vis comprend, dans un alésage du moyen d'emport alimenté en fluide incompressible, un piston lié à une vis qui cooopère avec la paroi intérieure taraudée dudit alésage, ce dernier communiquant par au moins un conduit avec la chambre de poussée de façon, par action sur ladite vis, à augmenter la pression dans ladite chambre de poussée.

Les différences des sections de l'élément annulaire et du piston de la pompe à vis, ainsi que le pas du filetage de la vis sont calculés de façon à appliquer à l'élément annulaire une forte action de soulèvement avec seulement un faible couple sur la vis.

Pour bien faire comprendre le dispositif selon l'invention on en décrira ci-après, à titre d'exemple sans caractère limitatif, une forme de réalisation préférée en référence au dessin schématique annexé dans lequel :
la figure 1 est une vue en perspective d'un dispositif d'emport équipé du système de serrage selon la présente invention ;
la figure 2 est, à plus grande échelle, une coupe verticale partielle du dispositif d'emport de la figure 1 ; et
la figure 3 est, également à plus grande échelle, une vue partielle en coupe horizontale transversale du dispositif d'emport de la figure 1, montrant plus particulièrement la commande hydraulique du système de serrage.

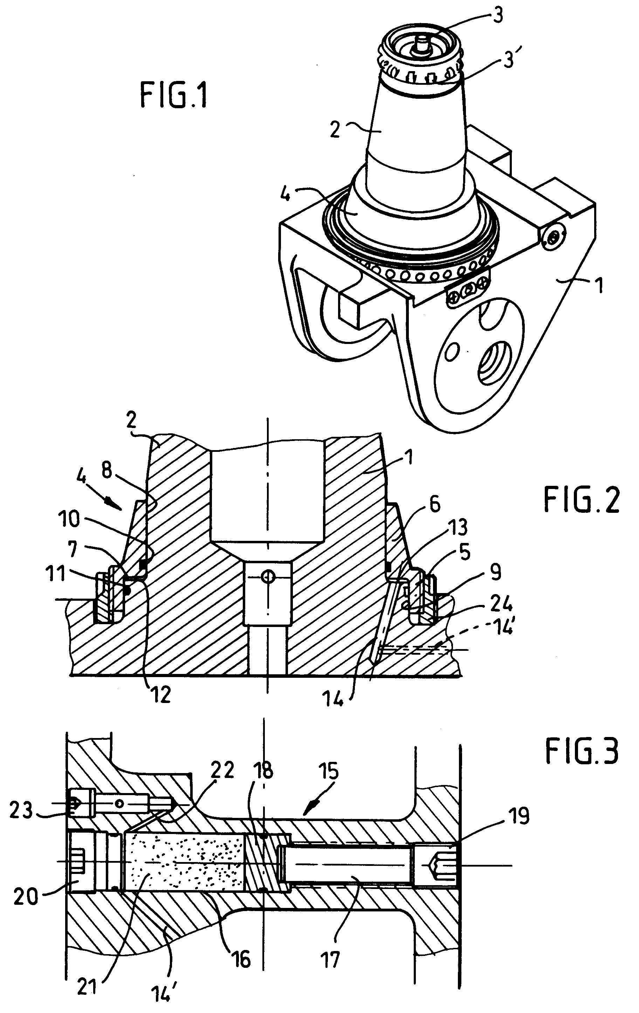

En référence à la figure 1 on a représenté en 1 un dispositif d'emport de charges, destiné à être fixé sous un avion. A sa partie supérieure le dispositif d'emport 1 comporte de façon connue un embout vertical 2 destiné à s'engager dans un alésage vertical ménagé dans l'aile ou le fuselage de l'avion (non représenté). Un dispositif à piston interne 3 repousse vers l'extérieur une couronne de galets 3bis qui viennent s'accrocher dans une gorge ménagée dans un support prévu à l'intérieur de l'alésage.

Pour immobiliser l'embout 2 à l'intérieur de l'alésage, un élément annulaire 4, coulissant le long de l'embout 2, vient se serrer contre un épaulement interne de l'alésage. Comme on le voit plus particulièrement à la figure 2, ledit élément annulaire 4 comporte deux parties annulaires 5 et 6 de diamètres différents, raccordées par une paroi horizontale 7. La partie annulaire 6 de plus petit diamètre coulisse le long de la paroi cylindrique 8 de l'embout 2, alors que la partie annulaire 5 de plus grand diamètre coulisse le long de la paroi cylindrique 9 de l'embout, avec interposition de joints d'étanchéité 10 et 11 respectivement.

La paroi horizontale 7 de l'élément annulaire 4 détermine, avec une paroi horizontale 12 de l'embout 2 reliant les parois cylindriques 8 et 9 de celui-ci, une chambre annulaire étanche 13 destinée à être alimentée en fluide hydraulique sous pression, pour commander le coulissement de l'élément annulaire 4 qui constitue alors un piston annulaire de section importante.

L'alimentation de la chambre 13 en fluide hydraulique sous pression s'effectue par un petit conduit 14 depuis une pompe à vis 15. Comme on le voit plus en détail à la figure 3 la pompe 15 comprend, à l'intérieur d'un alésage horizontal transversal 16 du dispositif d'emport, une vis 17 poussant sur un piston 18 de petit diamètre. La tête 19 de la vis 17 peut être actionnée de l'extérieur, alors que l'extrémité opposée de l'alésage 16 est fermée par un bouchon 20, lequel détermine avec le piston 18 une chambre 21 à volume variable destinée à contenir le fluide hydraulique et dans laquelle débouche un conduit 14' relié au conduit 14. La chambre 21 communique, par un conduit 22, avec une valve 23 permettant son parfait remplissage en fluide hydraulique.

L'ensemble fonctionne sur le principe d'une presse hydrostatique et, par le jeu des différences de section et le pas du filetage de la vis 17, il est possible de soulever avec force l'élément annulaire 4 en appliquant seulement un faible couple à la vis 17.

Le fonctionnement du dispositif de serrage se comprend facilement d'après la description qui précède. Pour réaliser le serrage de l'élément annulaire 4 contre le support constitué par exemple par l'épaulement intérieur de l'alésage vertical (non représenté), on agit sur la tête 19 de la vis 17, en alimentant la chambre 13 en fluide hydraulique et soulevant l'élément annulaire 4, jusqu'à obtenir un couple résistant déterminé . L'élément annulaire 4 est alors venu s'accoster sur le support avec la précontrainte voulue.

On serre ensuite sur la partie inférieure 5 de l'élément annulaire 4, avec un couple modéré, un écrou crénelé 24 qui assure ainsi le calage de l'élément annulaire 4 par rapport à l'embout vertical 2. Puis on dévisse la vis 17 pour faire chuter la pression du fluide, de sorte que l'élément annulaire 4 n'est plus tenu que par l'écrou crénelé 24.

Pour le démontage, il convient de procéder au desserrage de l'élément annulaire 4 et, pour cela, on visse la vis 17 pour établir la pression du fluide hydraulique dans la chambre 13 jusqu'à soulager l'écrou crénelé 24, lequel est alors facilement desserré. On dévisse ensuite la vis 17 pour la ramener à sa position d'origine, la pression du fluide dans la chambre 13 chutant à nouveau et libérant l'élément annulaire 4.

L'ensemble devient alors démontable, sans qu'il y ait eu besoin d'appliquer des couples de manoeuvre importants.

On comprendra que la description ci-dessus a été donnée à simple titre d'exemple, sans caractère limitatif, et que des adjonctions ou des modifications constructives pourraient y être apportées sans sortir du cadre de l'invention telle que revendiquée.

## Revendications

1. Système de serrage pour accrochage de moyens d'emport sous aéronefs, comprenant un embout central vertical (2), destiné à s'engager dans un alésage d'une structure de l'avion, et un élément annulaire (4) conçu pour se déplacer le long de l'embout central (2) afin de venir serrer un organe de support, caractérisé en ce que le système de serrage est hydraulique, ledit élément annulaire (4) déterminant avec la paroi extérieure de l'embout central (2) une chambre étanche de poussée (13) alimentée sélectivement en fluide incompressible, ledit élément annulaire (4) constituant un piston dont le serrage est commandé par la pression du fluide.

2. Système de serrage selon la revendication 1, caractérisé en ce que l'alimentation en fluide de ladite chambre de poussée (3) s'effectue par l'intermédiaire d'une pompe à vis incorporée dans le moyen d'emport (1).

3. Système de serrage selon la revendication 2, caractérisé en ce que ladite pompe à vis comprend, dans un alésage (16) du moyen d'emport (1) contenant du fluide incompressible, un piston (18) lié à une vis (17) qui coopère avec la paroi intérieure taraudée dudit alésage (16), ce dernier communiquant par au moins un conduit (14, 14') avec ladite chambre de poussée (13) afin, par action sur ladite vis (17), d'augmenter la pression dans ladite chambre de poussée (13).

4. Système de serrage selon la revendication 3, caractérisé en ce que la partie dudit alésage (16) située en avant du piston (18) est reliée à une valve (23) de remplissage de fluide.

5. Système de serrage selon la revendication 3 ou la revendication 4, caractérisé en ce que les différences de section des pistons (4, 18) et le pas du filetage de la vis sont calculés pour appliquer une forte action de soulèvement à l'élément annulaire (4) avec seulement un faible couple sur la vis (17).

6. Système de serrage selon l'une quelconque des revendications précédentes, caractérisé en ce que l'élément annulaire (4) présente des parties (5, 6) de deux diamètres différents coopérant chacune, par l'intermédiaire d'un joint d'étanchéité (10, 11), avec la paroi de l'embout central (2).

7. Système de serrage selon l'une quelconque des revendications précédentes, caractérisé en ce qu'il comprend un écrou (24) dont le vissage assure le maintien de l'élément annulaire (4) en position de serrage après avoir relâché la pression du fluide dans la chambre de poussée (13).

## Claims

1. Clamping system for attaching carrying means under aircraft, comprising a central vertical connector (2) for engaging in a bore of a structure of the aeroplane and an annular element (4) designed to move along the central connector (2) in order to clamp a support member, characterized in that the clamping system is hydraulic, the said annular element (4) defining, with the external wall of the central connector (2), a leaktight thrust chamber (13) supplied selectively with incompressible fluid, the said annular element (4) constituting a piston the clamping of which is brought about by the pressure of the fluid.

2. Clamping system according to Claim 1, characterized in that the said thrust chaser (13) is supplied with fluid by means of a screw pump incorporated in the carrying means (1).

3. Clamping system according to Claim 2, characterized in that the said screw pump comprises, in a bore (16) of the carrying means (1) containing incompressible fluid, a piston (18) connected to a screw (17) which cooperates with the tapped internal wall of the said bore (16), the latter communicating with the said thrust chamber (13) through at least one duct (14, 14') so that the pressure in the said thrust chamber (13) is increased by action on the said screw (17).

4. Clamping system according to Claim 3, characterized in that the portion of the said bore (16) which is situated in front of the piston (18) is connected to a fluid filling valve (23).

5. Clamping system according to Claim 3 or Claim 4, characterized in that the differences of the cross-sections of the pistons (4, 18) and the pitch of the thread of the screw are calculated so that a powerful lifting action is applied to the annular element (4) with only a low torque on the screw (17).

6. Clamping system according to any one of the preceding claims, characterized in that the annular element (4) has portions (5, 6) with two different diameters each cooperating with the wall of the central bore (2) by means of a seal (10, 11).

7. Clamping system according to any one of the preceding claims, characterized in that it comprises a nut (24) the screwing-on of which holds the annular element (4) in the clamping position after the fluid pressure in the thrust chamber (13) has been released.

## Patentansprüche

1. Spannsystem zum Anhängen von Mitnahmemitteln unter Luftfahrzeugen, umfassend einen vertikalen, zentralen Stecker (2), der dafür bestimmt ist, sich in eine Bohrung in einem Gefüge des Flugzeuges einzufügen, und ein ringförmiges Element (4), welches dafür ausgelegt ist, sich entlang des zentralen Steckers (2) zu verschieben, um ein Tragorgan zu verklemmen,
**dadurch gekennzeichnet,**
daß das Spannsystem hydraulisch ist, wobei das genannte ringförmige Element (4) mit der Außenwandung des zentralen Steckers (2) eine wahlweise mittels einer inkompressiblen Flüssigkeit gespeiste, dichte Druckkammer (13) festlegt, wodurch das genannte ringförmige Element (4) einen Kolben bildet, dessen Klemmwirkung durch den Druck der Flüssigkeit bestimmt ist.

2. Spannsystem nach Anspruch 1, dadurch gekennzeichnet, daß die Speisung der genannten Druckkammer (13) mit der Flüssigkeit mittels einer Schraubenpumpe erfolgt, die dem Mitnahmemittel einverleibt ist.

3. Spannsystem nach Anspruch 2, dadurch gekennzeichnet, daß die genannte Schraubenpumpe in einer inkompressible Flüssigkeit enthaltenden Bohrung (16) des Mitnahmemittels (1) einen Kolben umfaßt, der mit einer Schraube (17) verbunden ist, die mit der mit einem Innengewinde versehenen Innenwandung der genannten Bohrung zusammenarbeitet, wobei letztere mittels wenigstens einer Leitung (14,14') mit der genannten Druckkammer (13) kommuniziert, um per Aktion der genannten Schraube (17) den Druck in der genannten Druckkammer (13) ansteigen zu lassen.

4. Spannsystem nach Anspruch 3, dadurch gekennzeichnet, daß der vor dem Kolben (18) gelegene Teil der genannten Bohrung (16) mit einem Füllventil (23) für die Flüssigkeit verbunden ist.

5. Spannsystem nach Anspruch 3 oder 4, dadurch gekennzeichnet, daß die Differenz der Querschnitte der Kolben (4,18) und die Ganghöhe des Gewindes der Schraube darauf kalkuliert sind, mit nur einem kleinen Drehmoment auf die Schraube (17) eine starke Anhebungsbetätigung für das ringförmige Element (4) aufzubringen.

6. Spannsystem nach irgendeinem der vorhergehenden Ansprüche, dadurch gekennzeichnet, daß das ringförmige Element (4) Teilbereiche (5,6) mit zwei unterschiedlichen Durchmessern aufweist, die jeweils mittels Dichtungen (10,11) mit der Wandung des zentralen Steckers (2) zusammenarbeiten.

7. Spannsystem nach irgendeinem der vorhergehenden Ansprüche, dadurch gekennzeichnet, daß es eine Schraubenmutter (24) umfaßt, deren Gewinde die Beibehaltung des ringförmigen Elementes (4) in seiner Klemmposition sichert, nachdem der Flüssigkeitsdruck in der Druckkammer (13) nachgelassen hat.
